# EUROPÄISCHE PATENTSCHRIFT

(11) **EP 1 305 513 B1**
(45) Veröffentlichungstag und Bekanntmachung des Hinweises auf die Patenterteilung: **23.03.2005**
(21) Anmeldenummer: 01957749.3
(22) Anmeldetag: 02.08.2001
(51) Int. Cl.: F02M 25/07, F02B 47/08, F02B 77/08, F02D 21/08

(54) **VERFAHREN ZUM ÜBERPRÜFEN DER FUNKTIONSTÜCHTIGKEIT EINES ABGASRÜCKFÜHRUNGSSYSTEMS EINER BRENNKRAFTMASCHINE**
METHOD FOR FUNCTIONAL CHECKING OF AN EXHAUST RECYCLING SYSTEM ON AN INTERNAL COMBUSTION ENGINE
PROCEDE DE VERIFICATION DE LA CAPACITE DE FONCTIONNEMENT D'UN SYSTEME DE RECYCLAGE DES GAZ D'ECHAPPEMENT D'UN MOTEUR THERMIQUE

(30) Priorität: 04.08.2000 DE 10038258
(43) Veröffentlichungstag der Anmeldung: 02.05.2003
(73) Patentinhaber: SIEMENS AKTIENGESELLSCHAFT, 80333 München (DE)
(72) Erfinder: KÄSBAUER, Michael, 93073 Neutraubling (DE); FRIEDRICH, Arno, 93047 Regensburg (DE); BIRKNER, Christian, 93173 Irlbach (DE)
(86) Internationale Anmeldenummer: PCT/DE2001/002935
(87) Internationale Veröffentlichungsnummer: WO 2002/012703

(56) Entgegenhaltungen:
- DE-A- 4 216 044
- DE-A- 19 527 030
- FR-A- 2 674 574
- US-A- 5 621 167
- US-A- 6 024 075

## Beschreibung

Die Erfindung betrifft ein Verfahren zum Überprüfen der Funktionstüchtigkeit eines Abgasrückführungssystems einer Brennkraftmaschine nach dem Oberbegriff von Patentanspruch 1.

Zur Reduzierung des Stickoxidanteiles im Abgas einer Brennkraftmaschine werden Abgasrückführungssysteme eingesetzt. Über eine Abgasrückführleitung wird ein Teil des Abgases vom Abgastrakt in den Ansaugtrakt, d.h. in den Sammler des Saugrohres zurückgeführt. Über elektrische Signale einer Steuerungseinrichtung wird ein in der Abgasrückführleitung angeordnetes Abgasrückführventil angesteuert und damit die Masse des rückgeführten Abgases eingestellt. Da das Abgas der Brennkraftmaschine in seinen wesentlichen Bestandteilen ein Inertgas ist, kann durch Zumischen von Abgas zur angesaugten Verbrennungsluft die Verbrennungs-Spitzentemperatur gesenkt und damit der Ausstoß von Stickoxiden reduziert werden. Die Masse des rückgeführten Abgases im Verhältnis zur Summe aus der Masse des Frischgases (Ansaugluft) und der Masse des rückgeführten Abgases wird im allgemeinen als Abgasrückführrate bezeichnet.

Die Überwachung der Steuer- und Schließbarkeit eines solchen Abgasrückführventils ist erforderlich, um dessen richtiges Funktionieren gewährleisten zu können. Um die von den Gesetzgebern geforderten Abgasgrenzwerte einzuhalten, ist es notwendig, die Fahrzeuge mit Diagnoseeinrichtungen auszustatten, die es ermöglichen, die Fehlfunktionen von Sensoren und Systemen, die mit der Steuerung oder Betätigung abgasrelevanter Teile verbunden sind, zu erfassen und entsprechende Fehlermeldungen ausgeben. Zur Erfüllung von gesetzlichen Richtlinien zur On Board Diagnose (OBD) von Kraftfahrzeugen ist gerade die Überprüfung aller Komponenten des Luftpfades von besonderem Interesse. Insbesondere das vollständige Schließen des Abgasrückführventils muss möglich sein, da ansonsten bei einem Betrieb der Brennkraftmaschine mit ständig geöffnetem Abgasrückführventil die vorgeschriebenen Abgasgrenzwerte überschritten werden können.

In der DE 195 27 030 A1 ist ein Abnormalitätserfassungsverfahren und eine Vorrichtung für ein Abgasrückführungs-Steuersystem einer Brennkraftmaschine beschrieben. Die Abnormalität wird dabei hervorgerufen durch ein operatives Nachhinken einer Membran, welche ein Abgasrückführungsventil (AGR-Ventil) bildet. Das AGR-Ventil wird in Abhängigkeit von der Motorbetriebsinformation einschließlich eines Ansaugverteilerdrucks gesteuert. Eine Bedingung, die zum Aktivieren der Abnormalitätsentscheidung zu erfüllen ist, wird erfasst. Beim Erfassen der Abnormalitätsentscheidungs- Aktivierungsbedingung wird das AGR-Ventil zwangsweise geöffnet oder geschlossen. Auf der Basis der Differenz des Ansaugverteilerdrucks beim zwangsweisen Öffnen/Schließen des AGR-Ventils wird auf eine mögliche Abnormalität des AGR-Ventils entschieden.

Es ist die Aufgabe der Erfindung, ein Verfahren anzugeben, mit dem auf einfache Weise ohne zusätzliche Sensorik während des Betriebes der Brennkraftmaschine ohne Beeinträchtigung des Fahrbetriebes die Funktionstüchtigkeit des Abgasrückführungssystems der Brennkraftmaschine überprüft werden kann.

Diese Aufgabe wird erfindungsgemäß durch die Merkmale des Patentanspruchs 1 gelöst. Vorteilhafte Weiterbildungen sind in den Unteransprüchen angegeben

Die Erfindung zeichnet sich dadurch aus, dass zur Überprüfung des Abgasrückführventils im Leerlaufbetrieb der Brennkraftmaschine und bei stillstehendem Fahrzeug das Abgasrückführventil geschlossen wird und dabei das Signal eines im Ansaugtrakt der Brennkraftmaschine stromaufwärts der Einmündungsstelle einer Abgasrückführleitung in den Ansaugtrakt angeordneten Luftmassenmessers ausgewertet wird.

Überschreitet dieses Signal innerhalb einer ersten Zeitdauer nicht einen ersten vorgegebenen Schwellenwert, so wird auf eine fehlerhafte Dynamik des Abgasrückführventils geschlossen. Überschreitet das Signal innerhalb einer zweiten Zeitdauer nicht einen zweiten vorgegebenen Schwellenwert, so wird festgestellt, dass sich das Abgasrückführventil nicht vollständig schließen lässt.

Im drehzahlgeregelten Leerlaufbetrieb der Brennkraftmaschine regelt das Abgasrückführventil den Öffnungsquerschnitt der Abgasrückführungsleitung im allgemeinen auf eine bestimmte Stellung ein. In diesem Betriebszustand ist eine kurzfristige Überprüfung der Steuer- und Schließbarkeit des Abgasrückführventils möglich, ohne dass dabei eine Beeinträchtigung von Fahrbarkeit und Fahrsicherheit auftritt. Da der Leerlauf der Brennkraftmaschine als Betriebszustand gut definiert ist und im alltäglichen Fahrbetrieb sehr häufig auftritt (z.B. Ampelstops), eignet er sich sehr gut für Diagnosezwecke. Das Verfahren hat insbesondere den Vorteil, dass zur Überprüfung der Steuer- und Schließbarkeit des Abgasrückführventils keine zusätzliche Sensorik nötig ist.

Ein Ausführungsbeispiel der Erfindung ist im folgenden unter Bezugnahme auf die schematischen Zeichnungen näher erläutert.

Es zeigen:
- Figur 1: in Blockdarstellung eine Brennkraftmaschine mit einer Abgasrückführungseinrichtung und einer Steuerungseinrichtung zum Durchführen des erfindungsgemäßen Verfahrens,
- Figur 2: ein Ablaufdiagramm des Verfahrens und
- Figur 3: ein Zeitdiagramm für ausgewählte Betriebsparameter der Brennkraftmaschine.

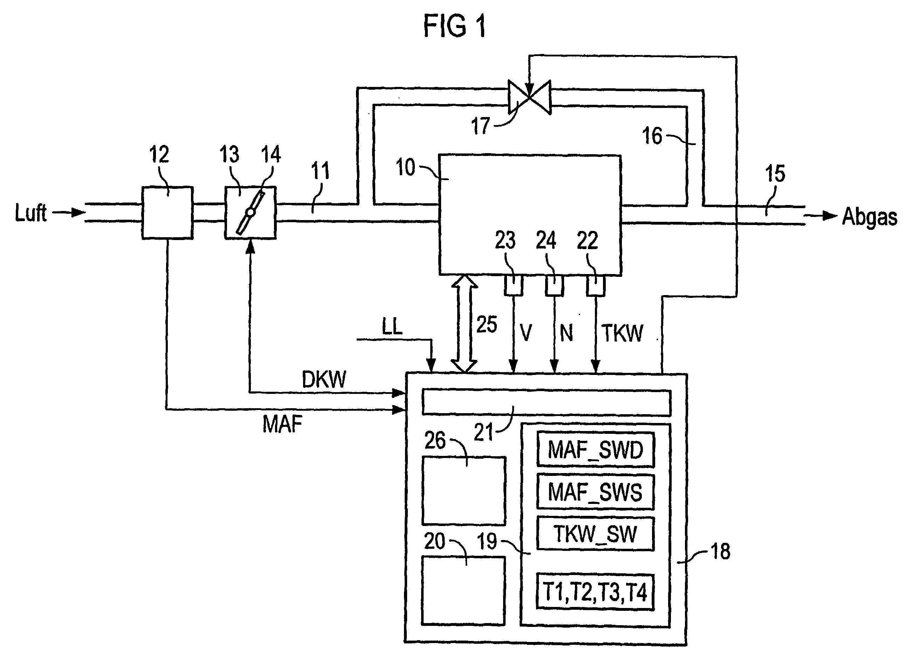

In Figur 1 ist in Form eines Blockschaltbildes sehr vereinfacht eine Diesel-Brennkraftmaschine 10 gezeigt, bei der das erfindungsgemäße Verfahren angewendet wird. Dabei sind nur diejenigen Komponenten dargestellt, die für das Verständnis der Erfindung notwendig sind. Insbesondere ist der Kraftstoffkreislauf sowie die Abgasnachbehandlungsanlage nicht gezeigt. Das erfindungsgemäße Verfahren kann aber auch bei einer fremdgezündeten Brennkraftmaschine eingesetzt werden,' in diesem Falle sind die Steller und Sensoren entsprechend zu modifizieren.

Der Brennkraftmaschine 10 wird über einen Ansaugtrakt 11 die zur Verbrennung notwendige Luft zugeführt. Im Ansaugtrakt 11 sind in Strömungsrichtung der angesaugten Luft (Pfeilsymbol) gesehen nacheinander ein Luftmassenmesser 12 und ein Drosselklappenblock 13 vorgesehen. Dieser beinhaltet eine Drosselklappe 14 und optional einen nicht dargestellten Drosselklappensensor, der ein dem Öffnungswinkel der Drosselklappe 14 entsprechendes Signal erfasst. Bei der Drosselklappe 14 handelt es sich beispielsweise um ein elektromotorisch angesteuertes Drosselorgan (E-Gas), dessen Öffnungsquerschnitt neben der Betätigung durch den Fahrer selbst (Fahrerwunsch) abhängig vom Betriebsbereich der Brennkraftmaschine über elektrische Signale einer Steuerungseinrichtung einstellbar ist.

Ausgangsseitig ist die Brennkraftmaschine 10 mit einem Abgastrakt 15 verbunden, in dessen weiteren Verlauf ein Abgaskatalysator und ein Schalldämpfer angeordnet sind (nicht dargestellt).

Eine Abgasrückführleitung 16 zweigt von dem Abgastrakt 15 ab und mündet stromabwärts des Drosselklappenblocks 13 in den Ansaugtrakt 11. In der Abgasrückführleitung 16 ist ein Abgasrückführventil 17 angeordnet, das einen nicht dargestellten elektromagnetischen Aktor umfasst.

Die Steuerung und Regelung der Brennkraftmaschine 10 übernimmt eine elektronische Steuerungseinrichtung 18. Solche elektronischen Steuerungseinrichtungen, die in der Regel einen oder mehrere Mikroprozessoren beinhalten, sind an sich bekannt, so dass im folgenden nur auf den im Zusammenhang mit der Erfindung relevanten Aufbau und dessen Funktionsweise eingegangen wird. Insbesondere weist die Steuerungseinrichtung 18 einen Fehlerspeicher 20 und eine Speichereinrichtung 19 auf, in der verschiedene Kennfelder und Schwellenwerte gespeichert sind, deren Bedeutung anhand der Beschreibung der weiteren Figuren noch näher erläutert wird.

Die Steuerungseinrichtung 18 umfasst ferner eine Vorverarbeitungseinheit 21, die Signale von Sensoren aufbereitet, welche Betriebsgrößen der Brennkraftmaschine 10 erfassen. Insbesondere werden der Steuerungseinrichtung 18 ein Signal MAF des Luftmassenmessers 12, ein Signal TKW eines Kühlmitteltemperatursensors 22, ein Signal v eines Geschwindigkeitssensors 23, ein Signal N eines Drehzahlsensors 24 und ein Signal LL, das den Leerlaufbetrieb der Brennkraftmaschine 10 kennzeichnet, zugeführt. Der Leerlaufbetrieb kann beispielsweise durch Auswerten des Signals eines Pedalwertgebers (nicht dargestellt) erkannt werden. Die Steuerungseinrichtung 18 ist noch mit weiteren nicht explizit dargestellten Sensoren und Aktoren über einen Daten-/Steuerbus 25 verbunden.

Die elektronische Steuerungseinrichtung 18 weist darüber hinaus eine elektrische Einrichtung 26 zum Steuern des Aktors des Abgasrückführventils 17 auf, welche in Abhängigkeit von einer oder mehreren Betriebsgrößen der Brennkraftmaschine den Öffnungsgrad des Abgasrückführventils 17 einstellt.

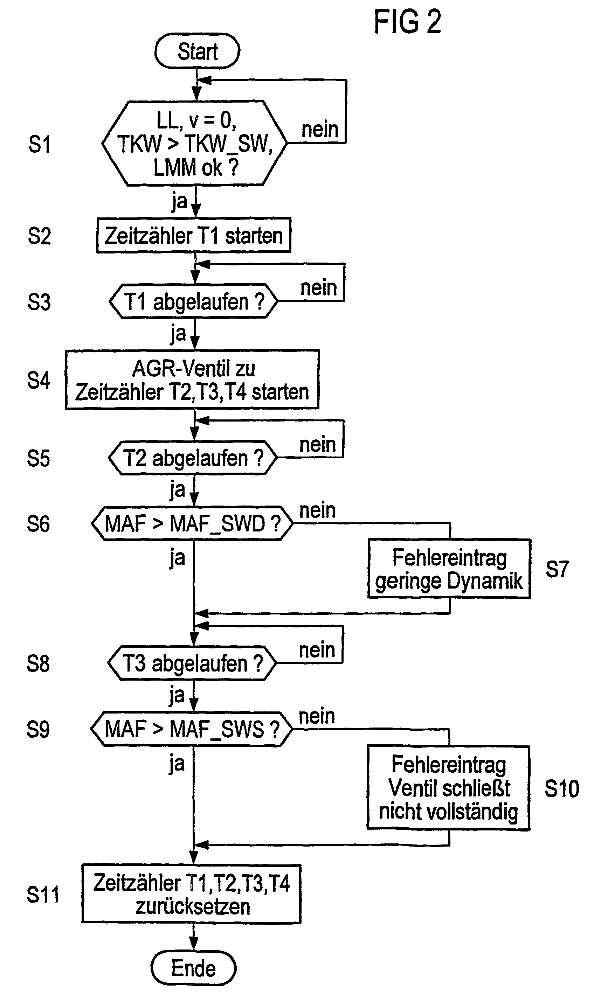

Ein Ablaufdiagramm des Verfahrens zur Überprüfung des Abgasrückführungssystem ist in der Figur 2 dargestellt.

In einem ersten Verfahrensschritt S1 wird abgefragt, ob vorgegebene Bedingungen zur Durchführung der Diagnose erfüllt sind. Wichtigste Voraussetzung für die Durchführung der Diagnose ist, dass sich die Brennkraftmaschine im Leerlaufbetrieb befindet. Um jegliche Beeinträchtigung des Fahrbetriebes während der Diagnose auszuschließen, wird auch überprüft, ob die Fahrzeuggeschwindigkeit v annähernd Null ist. Da Fahrzeuggeschwindigkeiten v=0 nur mit relativ großem Aufwand erfasst werden können, werden Fahrzeuggeschwindigkeiten, die zwar größer als Null sind, aber noch unterhalb eines bestimmten, vorgegebenen Grenzwertes (z.B. 1,8 km/h) liegen, als Signal für v = 0 behandelt. Außerdem muss die Kühlmitteltemperatur TKW oberhalb eines vorgegebenen Schwellenwertes TKW_SW liegen (warme Brennkraftmaschine) und es darf kein Fehlereintrag für den Luftmassenmesser 12 in dem Fehlerspeicher 20 vorliegen. Diese Abfragen werden ständig wiederholt, bis das Ergebnis der Abfrage positiv ist.

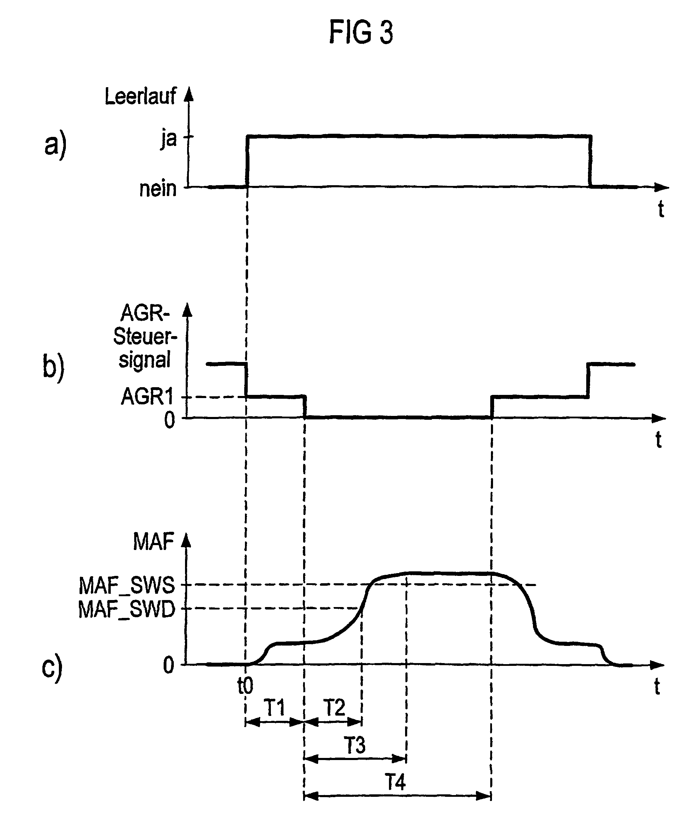

Ist dies der Fall, so stellt sich aufgrund des drehzahlgeregelten Leerlaufs der Brennkraftmaschine ein bestimmter Wert AGR1 (Fig.3b)) für das Steuersignal AGR des Abgasrückführventils 17 ein und ein Zeitzähler für eine erste Zeitdauer T1 wird gestartet (Zeitpunkt t0, Verfahrensschritt S2). Innerhalb dieser Zeitdauer T1 haben Leerlaufregler und Abgasrückführventil ausreichend Zeit, ihren Gleichgewichtszustand zu erreichen (Verfahrensschritt S3). Ist die Zeitdauer T1 abgelaufen, so wird in einem Verfahrensschritt S4 das Steuersignal AGR ausgehend von dem Wert AGR1 für die Diagnose auf den Wert Null gesetzt, um das Abgasrückführventil 17 vollständig zu schließen. In der Figur 3b) ist dies qualitativ vereinfacht in Form eines Sprunges dargestellt. Damit keine Komforteinbußen für den Fahrer des mit der Brennkraftmaschine 10 angetriebenen Fahrzeuges auftreten, kann dieser Übergang auch leicht verzögert, beispielsweise nach einer Rampenfunktion erfolgen.

Gleichzeitig werden in dem Verfahrensschritt S4 weitere Zeitzähler für unterschiedlich lange Zeitdauern T2, T3 und T4 gestartet. Nach Ablauf der Zeitdauer T2 kann die Ansteuerdynamik des Abgasrückführventils 17 überprüft werden. Hierzu wird das Signal MAF des Luftmassenmessers 12 ausgewertet, in dem der aktuelle Wert des Signals MAF des Luftmassenmessers 12 mit einem vorgegebenen Schwellenwerte MAF_SWD verglichen wird (Verfahrensschritt S6).

Befindet sich der Wert des Signals MAF des Luftmassenmessers nach Ablauf der Zeitdauer T2 oberhalb des Schwellenwertes MAF_SWD, so hat sich das Abgasrückführventil 17 ausreichend schnell schließen lassen und die Dynamik des Abgasrückführventils 17 hinsichtlich des Schließvorganges wird als ausreichend eingestuft, andernfalls erfolgt in einem Verfahrensschritt S7 ein entsprechender Fehlereintrag, z,B. "geringe Dynamik" in den Fehlerspeicher 20.

Nach Ablauf der Zeitdauer T3 (Abfrage in Verfahrensschritt S8), nach der das Abgasrückführventil 17 unabhängig von seinen dynamischen Eigenschaften auf alle Fälle geschlossen sein sollte, kann die vollständige Schließbarkeit des Abgasrückführventils 17 überprüft werden. Hierzu wird wieder das Signal MAF des Luftmassenmessers 12 ausgewertet, in dem der Wert des Signals MAF des Luftmassenmessers 12 nach Ablauf der Zeitdauer T3 mit einem gegenüber dem ersten Schwellenwert MAF_SWD höherem Schwellenwert MAF_SWS verglichen wird (Verfahrensschritt S9).

Befindet sich der Wert des Signals MAF des Luftmassenmessers nach Ablauf der Zeitdauer T3 oberhalb des Schwellenwertes MAF_SWS, so hat sich das Abgasrückführventil 17 vollständig schließen lassen und das Abgasrückführventil 17 wird als fehlerfrei erkannt, andernfalls erfolgt in einem Verfahrensschritt S10 ein entsprechender Fehlereintrag, z,B. "AGR-Ventil schließt nicht vollständig" in den Fehlerspeicher 20.

Die beiden genannten Fehlereinträge für das Abgasrückführventil 17 werden wie auch jeder andere Fehlereintrag in der Regel als Code abgelegt. Darüber hinaus ist es auch zweckmäßig, die Fehlereinträge erst nach einer statistischen Auswertung vorzunehmen, um Fehleinträge zu vermeiden. Ebenso ist es möglich, das Ergebnis der Diagnose, insbesondere bei Auftreten eines Fehlers eine akustische und/oder optische Warneinrichtung, beispielsweise eine Fehlerlampe im Fahrzeuginnenraum zu aktivieren.

Eine derartige Ansteuerung des Abgasrückführventils im Leerlauf bei stillstehendem Fahrzeug braucht im allgemeinen nur einmal pro Fahrzyklus durchgeführt werden, sofern die Diagnose vollständig innerhalb der Zeitdauer T4 (Fig.3c) beendet werden kann. Sobald während des Ablaufs der Diagnose die Diagnosebedingungen nicht mehr erfüllt sind, insbesondere der Betriebsbereich Leerlauf verlassen wird, ist die Diagnose sofort abzubrechen, um die Fahrbarkeit und die Sicherheit nicht zu gefährden und wieder neu zu starten, wenn die Bedingungen hierfür erfüllt sind.

Die Zeitdauern T1, T2, T3, T4, sowie die Schwellenwerte für den Luftmassenstrom MAF_SWD, MAF_SWS werden experimentell durch Fahrversuche und/oder auf dem Prüfstand ermittelt und sind in der Speichereinrichtung 19 abgelegt.

In einem letzten Verfahrensschritt S11 werden anschließend alle Zähler für die Zeitdauern zurückgesetzt und das Verfahren ist beendet.

In der Figur 3 sind die Zeitdiagramme für ausgewählte Betriebsparameter der Brennkraftmaschine dargestellt, wobei Fig. 3a) ein den Leerlauf kennzeichnendes Signal, Fig. 3b) das Ansteuersignal für das Abgasrückführventil und Fig. 3c) das Signal des Luftmassenmessers MAF, sowie die Schwellenwerte MAF_SWD, MAF_SWS und die Zeitdauern T1 bis T4 zeigen.

## Patentansprüche

1. Verfahren zum Überprüfen der Funktionstüchtigkeit eines Abgasrückführungssystems einer Brennkraftmaschine (10)
- mit einer Abgasrückführleitung (16), welche einen Abgastrakt (15) der Brennkraftmaschine (10) mit einem Ansaugtrakt (11) der Brennkraftmaschine (10) verbindet, so dass Abgas in den Ansaugtrakt (11) zurückgeführt werden kann,
- mit einem in der Abgasrückführleitung (16) angeordneten, zur Einstellung des Durchlassquerschnittes der Abgasrückführleitung (16) dienenden, mittels elektrischer Signale ansteuerbaren Abgasrückführventil (17),
- wobei das Abgasrückführventil (17) zu Diagnosezwecken derart angesteuert wird, dass sich Betriebsparameter der Brennkraftmaschine (10) ändern und die Reaktion der Betriebsparameter ausgewertet werden,
**dadurch gekennzeichnet, dass**
im Leerlaufbetrieb der Brennkraftmaschine (10) und bei Stillstand des mit der Brennkraftmaschine (10) angetriebenen Fahrzeuges als Betriebsparameter das Ausgangssignal (MAF) eines im Ansaugtrakt (11) stromaufwärts der Einmündungsstelle der Abgasrückführleitung (16) angeordneten Luftmassenmessers (12) herangezogen wird.

2. Verfahren nach Anspruch 1, **dadurch gekennzeichnet, dass**
- das Ansteuersignal für das Abgasrückführventil (17) ausgehend von einem sich im Leerlaufbetrieb einstellenden Wert (AGR) auf Null gesetzt wird, um das Abgasrückführventil (17) zu schließen,
- nach Ablauf einer vorgegebenen ersten Zeitdauer (T2) das Signal (MAF) des Luftmassenmessers (12) erfasst und mit einem ersten Schwellenwert (MAF_SWD) verglichen wird und
- auf ein hinsichtlich des dynamischen Verhaltens fehlerhaftes Abgasrückführventil (17) geschlossen wird, wenn der Schwellenwert (MAF_SWD) innerhalb der ersten Zeitdauer (T2) nicht überschritten wird.

3. Verfahren nach Anspruch 1, **dadurch gekennzeichnet, dass**
- das Ansteuersignal für das Abgasrückführventil (17) ausgehend von einem sich im Leerlaufbetrieb einstellenden Wert (AGR) auf Null gesetzt wird, um das Abgasrückführventil (17) zu schließen,
- nach Ablauf einer vorgegebenen zweiten Zeitdauer (T3) das Signal (MAF) des Luftmassenmessers (12) erfasst und mit einem zweiten Schwellenwert (MAF_SWS) verglichen wird und
- auf ein hinsichtlich der vollständigen Schließbarkeit fehlerhaftes Abgasrückführventil (17) geschlossen wird, wenn der Schwellenwert (MAF_SWS) innerhalb der zweiten Zeitdauer (T3) nicht überschritten wird.

4. Verfahren nach Anspruch 2 oder 3, **dadurch gekennzeichnet, dass** bei Erkennen eines fehlerhaften Abgasrückführventils (17) ein entsprechender Eintrag in einen Fehlerspeicher (20) erfolgt.

5. Verfahren nach Anspruch 1 oder 2, **dadurch gekennzeichnet, dass** die Überprüfung abgebrochen wird, wenn innerhalb einer vorgegebenen Zeitdauer (T4) der Leerlaufbetrieb verlassen wird oder das Fahrzeug sich nicht mehr im Stillstand befindet.

6. Verfahren nach Anspruch 2 oder 3, **dadurch gekennzeichnet, dass** die Schwellenwerte (MAF_SWD, MAF_SWS) und die Zeitdauern (T2, T3, T4) experimentell ermittelt werden und in einer Speichereinrichtung (19) abgelegt sind.

## Claims

1. Method for checking the operational integrity of an exhaust gas recirculation system of an internal combustion engine (10)
- having an exhaust gas recirculation line (16) which connects an exhaust gas tract (15) of the internal combustion engine (10) to an intake tract (11) of the internal combustion engine (10) so that exhaust gas can be returned to the intake tract (11),
- having an exhaust gas recirculation valve (17) disposed in the exhaust gas recirculation line (16), said exhaust gas recirculation valve serving to adjust the opening cross-section of the exhaust gas recirculation line (16) and controllable by means of electrical signals,
- with the exhaust gas recirculation valve (17) being controlled for diagnostic purposes such that operating parameters of the internal combustion engine (10) change and the reaction of the operating parameters is analysed,
**characterised in that**
when the internal combustion engine (10) is running in the idle state and the vehicle driven by means of the internal combustion engine (10) is stationary, the output signal (MAF) of a mass air flow sensor (12) disposed in the intake tract (11) upstream of the junction with the exhaust gas recirculation line (16) is used as the operating parameter.

2. Method according to claim 1, **characterised in that**
- the control signal for the exhaust gas recirculation valve (17) is set to zero based on a value (EGR) which is set in the idle state in order to close the exhaust gas recirculation valve (17),
- after expiry of a predefined first time period (T2) the signal (MAF) from the mass air flow sensor (12) is detected and compared with a first threshold value (MAF_SWD) and
- it is concluded that the exhaust gas recirculation valve (17) is faulty in respect of its dynamic behaviour if the threshold value (MAF_SWD) is not exceeded within the first time period (T2).

3. Method according to claim 1, **characterised in that**
- the control signal for the exhaust gas recirculation valve (17) is set to zero based on a value (EGR) which is set in the idle state in order to close the exhaust gas recirculation valve (17),
- after expiry of a predefined second time period (T3) the signal (MAF) from the mass air flow sensor (12) is detected and compared with a second threshold value (MAF_SWS) and
- it is concluded that the exhaust gas recirculation valve (17) is faulty in respect of its capability to close completely if the threshold value (MAF_SWS) is not exceeded within the second time period (T3).

4. Method according to claim 2 or 3, **characterised in that** upon detection of a faulty exhaust gas recirculation valve (17) an appropriate entry is made in a fault memory (20).

5. Method according to claim 1 or 2, **characterised in that** the check is aborted if the engine is no longer in the idle state or the vehicle is no longer stationary within a predefined time period (T4).

6. Method according to claim 2 or 3, **characterised in that** the threshold values (MAF_SWD, MAF_SWS) and the time periods (T2, T3, T4) are determined experimentally and stored in a memory device (19).

## Revendications

1. Procédé de contrôle du fonctionnement d'un système de recyclage des gaz d'échappement d'un moteur à combustion interne (10) comprenant :
- un conduit de recirculation des gaz d'échappement (16), par lequel une tubulure d'échappement des gaz (15) du moteur à combustion interne (10) est reliée à une tubulaire d'admission (11) du moteur à combustion interne (10), de telle sorte que les gaz d'échappement sont réintroduits dans la tubulure d'admission (11 ),
- une vanne de recyclage des gaz d'échappement (17) agencée dans le conduit de recirculation des gaz d'échappement (16), destinée à ajuster la section de passage du conduit de recirculation des gaz d'échappement (16) et apte à être activée par des signaux électriques,
- la vanne de recyclage des gaz d'échappement (17) étant activée à des fins de diagnostic, de manière à modifier les paramètres de fonctionnement du moteur à combustion interne (10) et à analyser la réaction des paramètres de fonctionnement,
**caractérisé en ce que**
lorsque le moteur à combustion interne (10) tourne au ralenti et que le véhicule actionné par le moteur à combustion interne (10) est à l'arrêt, le signal de sortie (MAF) d'un dispositif de mesure (11) de la masse d'air (12), agencé en amont de la sortie du conduit de recirculation des gaz d'échappement (16), est pris en compte comme paramètre de fonctionnement.

2. Procédé selon la revendication 1, **caractérisé en ce que**
- pour fermer la vanne de recyclage des gaz d'échappement (17), le signal de commande de la vanne de recyclage des gaz d'échappement (17) est mis à zéro à partir d'une valeur (AGR) établie dans la phase de ralenti,
- à la fin d'une première période (T2) prédéfinie, le signal (MAF) du dispositif de mesure de la masse d'air (12) est enregistré et est comparé à une première valeur seuil (MAF_SWD),
- un défaut dans le comportement dynamique de la vanne de recyclage des gaz d'échappement (17) est déterminé lorsque la valeur seuil (MAF_SWD) n'est pas dépassée pendant la première période (T2).

3. Procédé selon la revendication 1, **caractérisé en ce que**
- pour fermer la vanne de recyclage des gaz d'échappement (17), le signal de commande de la vanne de recyclage des gaz d'échappement (17) est mis à zéro à partir d'une valeur (AGR) établie dans la phase de ralenti,
- à la fin d'une deuxième période (T3) prédéfinie, le signal (MAF) du dispositif de mesure de la masse d'air (12) est enregistré et est comparé à une deuxième valeur seuil (MAF_SWS),
- un défaut de fermeture complète de la vanne de recyclage des gaz d'échappement (17) est déterminé lorsque la valeur seuil (MAF_SWS) n'est pas dépassée pendant la deuxième période (T3).

4. Procédé selon la revendication 2 ou 3, **caractérisé en ce que**, à la détection d'un défaut de la vanne de recyclage des gaz d'échappement (17), un enregistrement correspondant est entré dans la mémoire des messages d'erreur (20).

5. Procédé selon la revendication 1 ou 2, **caractérisé en ce que** le contrôle est interrompu lorsque, pendant une période (T4) prédéfinie, le moteur ne tourne plus au ralenti ou le véhicule n'est plus à l'arrêt.

6. Procédé selon la revendication 2 ou 3, **caractérisé en ce que** les valeurs seuils (MAF_SWD, MAF_SWS) et les périodes (T2, T3, T4) sont déterminées expérimentalement et enregistrées dans une unité de mémoire (19).
